# EUROPEAN PATENT APPLICATION

(11) **EP 4 124 561 A1**
(43) Date of publication of application: **01.02.2023**
(21) Application number: 22187730.1
(22) Date of filing: 29.07.2022
(51) Int. Cl.: B63C 11/08

(54) **EXHAUST VALVE FOR INFLATABLE DIVING EQUIPMENT**

(30) Priority: 30.07.2021 IT 202100020663
(71) Applicant: Ferplast S.r.l., 16031 Sori (GE) (IT)
(72) Inventor: Ferrari, Cristiano, 16031 Sori (GE) (IT)
(74) Representative: Karaghiosoff, Giorgio Alessandro

(57) **Abstract**

Exhaust valve for inflatable diving equipment comprising
- A valve body (21) with an annular peripheral flange (321) for sealing stable connection with a band of material along the edge of a passage opening in the delimiting wall of a hollow body (22); a cylindrical collar (210) surrounded by said annular flange and provided with coupling members to corresponding coupling members of a cover cap (212) of said valve body (21), said cylindrical collar internally carries an annular valve seat (23) which surrounds an opening communicating with the hollow body (22) and which cooperates with a shutter provided on the side of the valve seat opposite the internal space of the hollow body (22) and which shutter is stably stressed, in the closed position, against the valve seat (23), by an elastic element (26) which is interposed between a wall of the cover cap (212) and the facing side of the shutter, optionally displacement organs for moving the shutter from the stable closed position of the valve to an open position, the cover cap (212) covers the valve seat and the shutter towards the outside and is provided with at least one passage opening to which there is associated an interception and/or a deflection screen of particles or other suspended material, which screen leaves a discharge passage free or openable. In one embodiment, the said interception screen is constituted by a shutter for closing said at least one opening, which shutter is of the "non-return" type.

## Description

The present invention relates to an exhaust valve for inflatable diving equipment, such as for example underwater balancers.

This equipment used to adjust the user's buoyancy in the water, are equipped with an inflating device, which allows the introduction of air into the relative inflatable bag and one or more devices, or valves, for discharge that allow to expel air from the bag itself.

The exhaust valves can be manually operated, to expel the desired amount of air, or automatically operated in the presence of a certain pressure, to prevent over-pressurization of the inflatable bag of the device.

The manual discharge and automatic overpressure discharge functions are often performed by a single valve.

Typically, in general, a discharge valve of the above type and for the above applications comprises:
- a valve body with an annular peripheral flange for sealingly stable connection with a band of material along the edge of a passage opening in the delimiting wall of a hollow body;
- a cylindrical collar surrounded by said annular flange and provided with coupling members to corresponding coupling members of a cover cap of said valve body, and in which
- said cylindrical collar internally carries an annular valve seat which surrounds an opening of said valve seat communicating with the hollow body, which valve seat cooperates with a shutter comprising a gasket and which shutter is provided on the side of the valve seat opposite to the internal compartment of the hollow body and is stably pushed with a predetermined force, in the closed position of the valve, against the valve seat by an elastic element which is interposed between a wall of the cover cap and the facing side of the shutter, while optional means for moving the shutter against the action of said elastic element, from the stable closed position of the valve to an open position of the valve, in which open position the shutter is spaced away from the valve seat and in which
the cover cap covers the valve seat and the shutter towards the outside and is provided with at least one passage opening.

In this kind of exhaust valves, the cover cap has a plurality of openings which are distributed along the wall of the cap itself. This wall has a shape constituted by a substantially conical lateral wall which internally presents the coupling members to the corresponding coupling members of the cylindrical collar of the valve body, typically a thread, respectively internal and external. The lateral conical surface is closed at the top by an upper surface which can be flat or slightly arched and has one or more passage openings towards the valve body and therefore towards the valve seat, both for the passage of the discharged fluid and also for the passage of shutter actuating members for the manual or servo-controlled displacement of said shutter from the stable closed position to the opening position of the valve.

Typically, the said passage openings are stably open and especially the openings in the upper wall of the cap allow the entry of particles from the outside. These particles can penetrate between the shutter and the valve seat and/ between the shutter and the cover cap and therefore can compromise the functionality of the valve, for example by compromising the sealing condition of the shutter against the seat and/or by preventing a correct displacement of the shutter towards the cover cap, from the closed position of the valve to the open position of it.

Document EP3059479 discloses a buoyancy compensation jacket which comprises an inflatable hollow body, which is provided with an opening to which a discharge valve is associated which can be controlled in relation to its opening condition by means of a motorized shutter for displacement of the shutter and alternatively by means of a second shutter that can be operated manually. The two shutters are stably loaded in the closed condition by means of a spring to prevent the escape of the pressure gas present inside the inflatable hollow body, while the motorized and/or manual actuator are configured to push the shutter, against the loading action of the same in the closed position, in a position of spacing from the corresponding valve seat. The outgoing gas penetrates inside a chamber delimited by a cover cap fixed to the valve body and which is provided in one of its upper walls with a plurality of permanently open discharge openings.

Therefore in this embodiment, similarly to the valves present in the state of the art, the internal compartment of the valve body delimited by the valve seat and the cover cap are always open to the external environment and unwanted material can penetrate into said compartment and it may deposit in the actuating mechanisms of the shutters as well as between the gaskets of the same and the valve seat, generating malfunctions, blockages of the displacements thereof and/or preventing correct adhesion of the gasket on the valve seat which gives rise to leakage and/or gas outflows.

Document IT201900005516 (10201900005516) describes an exhaust valve of the kind known in the state of the art and in which the cover has at least one opening in its upper wall through which the gas discharged from the inflatable bag can escape from the compartment delimited by said cover when the valve is opened, in this case manually. Also in the embodiments described in this example, the openings provided in the cover cap are always open and no closing and/or shielding device is provided against the infiltration of particles which can compromise the operation of the valve by depositing themselves in the compartment delimited by the cover cap. The purpose of the invention is therefore to produce in a simple and quick way a valve of the kind described at the beginning which valve effectively allows to overcome the drawbacks described above, without compromising the constructive and functional simplicity of this kind of valves and thus ensuring effective protection against the penetration of particles of foreign material inside the valve and the malfunctions caused by it.

The invention achieves the above mentioned aims with a discharge valve of the kind described at the beginning the said discharge valve comprising:
- a valve body with an annular peripheral flange for sealingly stable connection with a band of material along the edge of a passage opening in the delimiting wall of a hollow body;
- a cylindrical collar surrounded by said annular flange and provided with coupling members to corresponding coupling members of a cover cap of said valve body, and in which
- said cylindrical collar internally carries an annular valve seat which surrounds an opening of said valve seat communicating with the hollow body, which valve seat cooperates with a shutter comprising a gasket and which shutter is provided on the side of the valve seat opposite to the internal compartment of the hollow body and is stably pushed with a predetermined force, in the closed position of the valve, against the valve seat by an elastic element which is interposed between a wall of the cover cap and the facing side of the shutter, while optional means for moving the shutter against the action of said elastic element, from the stable closed position of the valve to an open position of the valve, in which open position the shutter is spaced away from the valve seat and in which
- the cover cap covers the valve seat and the shutter towards the outside and is provided with at least one passage opening and in which
associated with said at least one passage opening of the covering cap there is an interception and/or deflection screen for suspended particles or other material, which screen leaves a discharge passage free or which screen allows the said discharge passage to be opened.

In one embodiment said screen consists of a net or a grid that extends over the entire opening of said at least one opening and which has passage openings of a predetermined particle size.

In a further embodiment, said at least one discharge passage is constituted by at least one opening which is stably open or openable, the axis of which opening is oriented mainly or exclusively tangentially to said at least one opening of said cover cap.

Thanks to this, the jet of gas discharged leaving the said at least one discharge passage which coincides with and communicates with a corresponding opening of the cover cap, also acts as a thrust and/or dragging element in the direction of removal, in a lateral and/or radial direction with respect to the valve, thus reducing the probability that when the discharge valve is closed the material can fall back on it.

In a variant of said embodiment, said interception screen is constituted by a wall which overlaps at a certain distance from it the open section of said at least one opening and optionally also the wall of the cover cap at least in the area surrounding said at least one opening.

In a further variant embodiment, said opening screen consists of a shutter for closing said at least one opening, which shutter is of the "non-return" type and closes said at least one opening in the direction of passage from the outside to the inside of the said closure cap, while allowing the passage in the direction from the inside of the cover cap to the outside of the same one.

Thanks to this arrangement, an effective outflow of the fluid is always ensured during the discharge phase, that is, when the valve is opened, while effectively preventing the entry of material inside the cover cap.

With reference to the second variant of the second embodiment, the closure of the opening or of the openings of the cover cap can be achieved thanks to a membrane valve which is configured in such a way as to maintain, thanks to the combination of shape and intrinsic elasticity, a closed condition in which it adheres against a sealing surface that surrounds the edge of the opening or of the openings, while in a condition of passage of the fluid from the inside of the cap towards the outside of the same, it is the pressure of the outgoing fluid itself that pushes the membrane in an open condition, lifting it from the said sealing surface.

Valves with diaphragm shutters are known since long time and are widely used also in the diving branch and therefore the person skilled in the art is able to size and configure a valve of this type relying on his basic technical knowledge.

According to an embodiment, the more general solution described above can be provided in combination with a discharge valve whose cover cap has a plurality of openings distributed on its upper surface around a central axis of symmetry.

In this case, with reference to the first embodiment, each of said openings can be provided with said grid which extends for the entire open section of the corresponding opening, or it is possible to provide a single grid which overlaps the cover cap and all the openings or more grids, each of which overlaps at least a predetermined number of said openings.

With reference to the discharge valve whose cover cap has a plurality of openings distributed on its upper surface around a central axis of symmetry, this can be provided in combination with the second embodiment of the interception screen.

With reference to the first variant of this second embodiment, it is possible to provide an interception wall which has a shape and an extension such as to overlap all said openings, or two or more adjacent parts of interception wall, each of which overlaps two or more of said openings.

Similarly to the above, in combination with a discharge valve whose cover cap has a plurality of openings distributed on its upper surface around a central axis of symmetry, the second variant of the first embodiment can also be provided in which, in this case, a single diaphragm shutter is provided in the form of a disk or ring which overlaps said upper side of the cap and the openings provided thereon and at least one peripheral annular band connecting said upper side of the cap to the cylindrical or slightly conical side wall of the cap, which peripheral band forms a valve seat with which a coincident perimetral band of said diaphragm shutter co-operates in sealing, the said diaphragm shutter being provided in the central zone with fastening members to said cover cap.

In one embodiment the said membrane shutter (30) is constituted by a disk and the said members for fixing the membrane shutter consist of an appendix, such as a central pin or peduncle, which extends in the direction of the cover cap and which appendix is intended to engage by means of interlocking and/or shape coupling in a coincident central seat provided in the upper wall of the cap, such as a hole or the like.

In an embodiment of the appendix it has an enlarged head with respect to a part of the stem and the opening or hole in the cover cap has a diameter corresponding to that of the said stem of the said appendix but smaller than the said enlarged head, since the said enlarged head is forced through said hole and said opening thanks to a radial elastic constriction or compression of said head upon axial thrust of said appendage into said hole.

In an alternative embodiment, the diaphragm shutter is annular in shape and has a central opening, while the fastening members consist of separate constructive walls which have opposing clamping surfaces of the diaphragm shutter and of the cover cap, the said clamping surfaces are axially spaced from each other to such an extent as to overlap opposing surfaces of the diaphragm shutter and of the cover cap, clamping them against each other.

Typically, the membrane shutter is made of relatively soft and elastically flexible and/or compressible material, such as features similar to rubber or other elastomeric materials.

At the state of the art there is a considerable variety of membrane shutters which have fixing points distributed along the surface of the membrane, for example aligned along a diameter of the discoid membrane and which therefore allow a butterfly wing type membrane lifting relative to the two parts of the same one divided by the ideal line of alignment of the said fixing points. This is to demonstrate that it is possible to provide different types of diaphragm shutters in the more general combination defined above.

It should also be noted that the circular or cylindrical shape is certainly a preferred shape for this type of exhaust valves, but it is also possible to apply the invention to other types of exhaust valves which have similar characteristics in the principle and possibly a different shape from the circular or discoid one.

According to another feature, the means of displacement of the shutter in the opening condition of the valve against the action of the elastic element are constituted by a tie rod, preferably of flexible material, such as a cord or the like, which tie rod is fixed to the shutter and passes outside the cover, through a hole provided in the upper wall of the same which overlaps the shutter.

By exerting a traction force on the tie rod, the shutter is lifted from the valve seat and the valve is thus opened. By releasing the traction action, the elastic element brings the shutter back against the valve seat and the valve is closed.

According to one feature, the opening for passage of the tie rod through the upper wall of the cover cap at the same time constitutes the coupling opening of the membrane shutter fixing means, said opening being sized and shaped correspondingly to said means of fixing and the tie-rod being made to pass through a through hole which passes through said fixing means from the end cooperating with said opening in the covering cap opening onto the external side of the membrane shutter which closes the passage openings of the covering cap.

This solution can be applied in combination with any type of membrane shutter and with any type of fastening elements of said membrane shutter to the cover cap.

The said solution is therefore also applicable to the embodiment in which the covering cap has a coaxial central hole for interlocking engagement of a coaxial central appendix of the diaphragm shutter, the said appendix being made tubular with a through hole that opens in correspondence with of the coupling end to the central hole of the cover cap and opens on the external side of the center of the diaphragm shutter and through said hole the shutter displacement rod which opens the valve passes from the inside of the cover cap to the outside of the same.

The solution according to the present invention may also be applied to a kind of valve according to the Italian patent application IT102016000038632. In this patent application the valve body is made in such a way as to be partially axially recessed towards the inflatable hollow body in such a way to have a smaller protrusion from the hollow body than conventional valves.

In this valve, the main difference is that the peripheral flange of the valve body, with which this is fixed to the peripheral edges of the opening of the hollow body, does not connect directly to the cylindrical collar to which it is fixed, preferably thanks to a screw coupling the cover cap, but this collar is fixed to an intermediate flange inside the peripheral fixing flange at the edges of the opening of the hollow body and starts axially from it, said intermediate flange being axially offset to a predetermined extent towards the inside of the hollow body with respect to the plane in which the external peripheral flange for fixing to the edge of the opening of the hollow body is contained and therefore also with respect to the wall of the edge of the hollow body or of said peripheral band of the opening thereof.

In this way, the axial extension of the collar and of the cover cap which are necessary to guarantee a space delimited by said elements which has sufficient space to house the valve seat, the shutter and the tie rod or any other type of displacement member of the shutter is at least partially displaced towards the inside of the hollow body with respect to its peripheral wall so that the valve protrudes to a limited extent from this wall.

Therefore, as regards the provision of a diaphragm shutter that closes the openings of the cover cap, preventing the entry of particles into the valve and allowing the fluid to escape when the valve is opened, it is evident that this diaphragm shutter may be applied without requiring any inventive effort also to this type of valve to which the present invention also refers and to a valve of the type described at the beginning, in which the fixing collar of the cover cap is fixed to the peripheral fixing flange in a position whereby the axial end facing the hollow body is arranged behind the said annular flange, i.e. behind the top of the said annular flange which is opposite the cover cap.

It is also worth highlighting here the fact that it is possible to provide a kit for modifying and integrating pre-existing valves, which kit includes at least one diaphragm shutter having a shape corresponding to the upper wall of the cover cap;
fastening members in at least one point of said diaphragm shutter to the cover cap,
the said diaphragm shutter and/or the said fastening members being provided with a passage opening coinciding with at least one passage opening in the wall of the cover cap intended for the passage from the outside of the valve into the compartment delimited by the cover cap of actuation members, i.e. displacement members of the shutter for opening and closing the valve.

In one embodiment, this kit can provide a replacement cover cap which has a shape and size identical to the cover cap present on the pre-existing valve, which replacement cover cap comprises a central through opening, one or more distributed passage openings around said central opening and a radially outermost perimeter band of the upper wall of said cap which constitutes the valve seat cooperating in sealing with the peripheral lip of a diaphragm shutter;
the said diaphragm shutter being circular in shape and having a central coupling appendix with elastic interlocking in the said central hole of the said replacement cover cap, the said central appendix of the said membrane shutter and the said membrane shutter being provided with a through hole with an opening at the end of said appendix and with an opening on the external side of said diaphragm shutter for the passage of a displacement member of the shutter which displacement member opens and closes the valve itself.

The great constructive simplicity and the remarkable functional effectiveness of the protection system provided in the valve according to the present invention appear clearly from what has been shown and described above.

The system is so simple and easy to apply that it can easily be created as an adaptation kit for existing exhaust valves. The kit does not require special knowledge and dexterity to be assembled correctly and safely.

The present invention also relates to an inflatable hollow body such as in particular an inflatable hollow body selected from the following non-exhaustive list: an underwater balancer, a lifting balloon for underwater use, an inflatable diving equipment, which inflatable hollow body is provided of at least one discharge valve for inflatable underwater equipment made according to one or more of the embodiments described above.

Other characteristics and advantages of the present invention will appear more clearly in the following detailed description of a particular embodiment, made with reference to the attached drawing, given by way of non-limiting example and on which:
Figure 1 is a schematic cross-sectional representation of an exhaust valve for traditional inflatable diving equipment.
Figure 2 is a top perspective view of a valve according to the present invention.
Figure 3 is a side elevation view of a valve according to the present invention.
Figure 4 is a view similar to Figure 1, in which the valve is made according to an executive example of the present invention.
Figure 5 is an enlarged schematic cross-sectional view of the exhaust valve for inflatable diving equipment according to Figure 4.
Figure 6 shows an alternative embodiment of an exhaust valve to which the present invention can be applied.

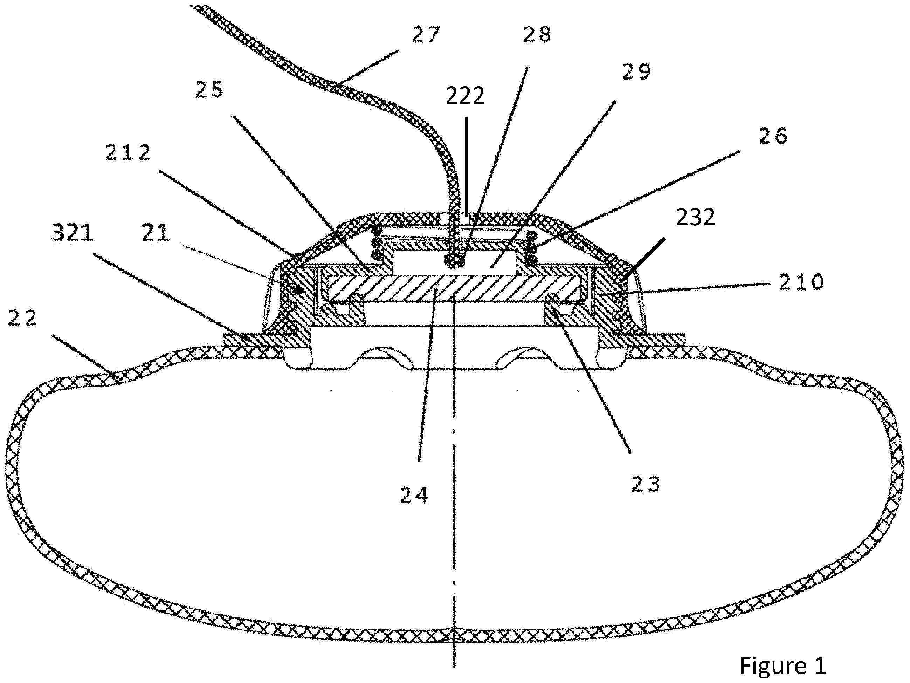

An example of a traditional discharge valve (manual and overpressure), for example and not limited to an underwater buoyancy equilibrator is schematically represented in Fig. 1.

These exhaust valves generally consist of a main body 21 provided with a valve seat 23 against which a flat seal 24 of a shutter acts. The gasket 23 is kept in the closed position by a hard disk 25 stressed by a calibrated cylindrical helical spring 26. The hard disk 25 is provided with a raised seat 29 to allow the connection of a coupling terminal 28 of a traction member, such as for example a control cable 27 and the whole is enclosed by a cover cap 212, which is fixed to the body 21, preferably in a removable way. According to the type of construction, normal or lowered, the covering cap 212 covers the main body 21 towards the outside at a certain distance from the valve seat and from the shutter, forming a space in which said valve seat, the shutter, the elastic element 26 are housed.

When provided as in the example illustrated, the other elements 25, 27 and 28 are also provided inside the compartment.

The valve shown has features which are not to be considered limiting of the present invention but constitute a non-limiting example.

In a non-limiting but preferential way, the covering cap 212 has a cylindrical wall section provided with an internal thread with which it is screwed onto an external thread of a collar 210 of the main body 21 which is carried radially inside the peripheral flange 321 for fastening the body 21, for example, to a peripheral boundary band of an opening in a wall of an inflatable hollow body indicated with 22.

The cover cap 212 keeps the spring 26 compressed in its calibrated loaded position against the side of the hard disk 25 which carries the seal 24 of the shutter. The spring 26 stably pushes the shutter against the valve seat 23, holding it stably and with a predetermined force in the closing position of the valve.

The valve is opened manually, by lifting the hard disk 25 and the flat gasket 24 associated with it by means of manual traction and/or by means of a motorized actuator of the control cable 27, 28, or the opening of the valve also occurs automatically, when the pressure inside the inflatable hollow body to which the valve is applied is such as to overcome the thrust of the calibrated spring 26 against the hard disk 25 and the flat gasket 24.

The valve body 21 is generally welded at high frequency on the flexible material (thermoplastic elastomer) used for the inflatable hollow body 22. This requires the valve body 21 to be made with the same thermoplastic elastomer used for the bladder, generally polyurethane, for ensuring a strong and optimal connection with the bag/hollow body itself.

The actuation member of the shutter 24, 25, i.e. in this case, the cable 27 is passed inside the valve, i.e. in the compartment delimited by the cover cap 212 through a hole 222 provided in the upper wall of the cover cap 212.

Furthermore, a plurality of openings 242 through which the discharged fluid passes when the shutter 24, 25 is moved into the valve opening position, i.e. removed from the valve seat 23.

The perimeter edge of the upper wall of the cover 212 which, in this case, is convex on the side towards the outside and concave on the side towards the inside of the valve, is connected to a cylindrical end portion 232 of the cover cap 212 which has the internal thread of engagement with the external thread of the collar 210, said cylindrical portion 232 and said collar therefore having internal and external diameters respectively dimensionally matched to each other.

It is worth remembering here that the example illustrated is not limiting and that the technical teaching of the present invention is applied without requiring substantial changes to other configurations of the drain valve, such as the drain valve made according to document IT102016000038632.

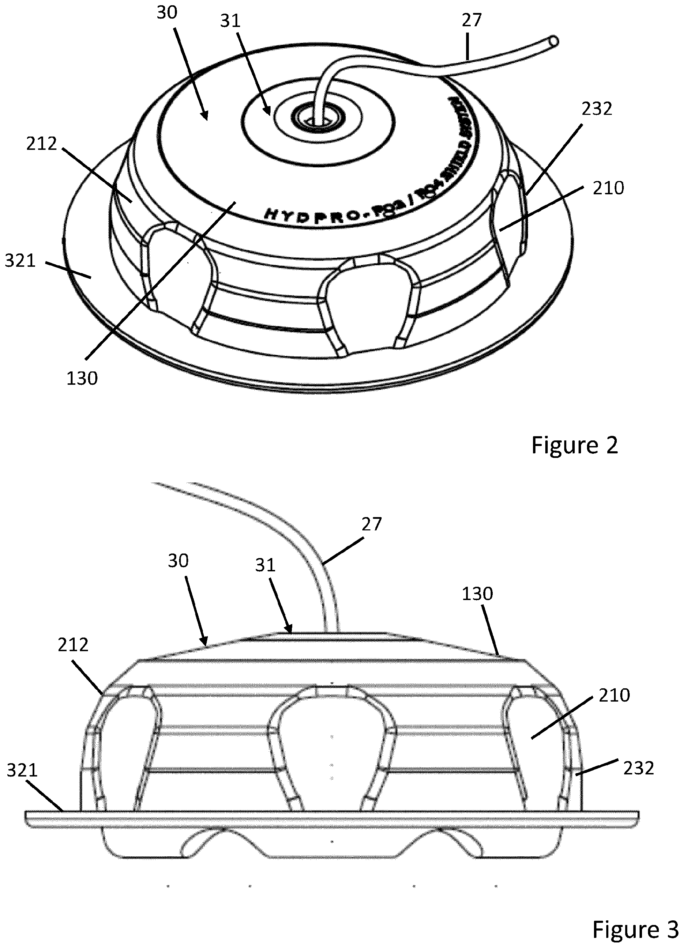

Figures 2 to 5 show an example of a valve according to the present invention, in which the exhaust valve is made substantially as described with reference to Figure 1. In the remaining description, reference will therefore be made to the preceding description using the same reference numbers for identical parts or parts having identical functions, while the features envisaged by the present invention will be described with greater precision. These will be configured in accordance with the specific construction of the exemplary embodiment of Figure 1, without this constituting any limitation of the claimed technical concept, but only an example of application.

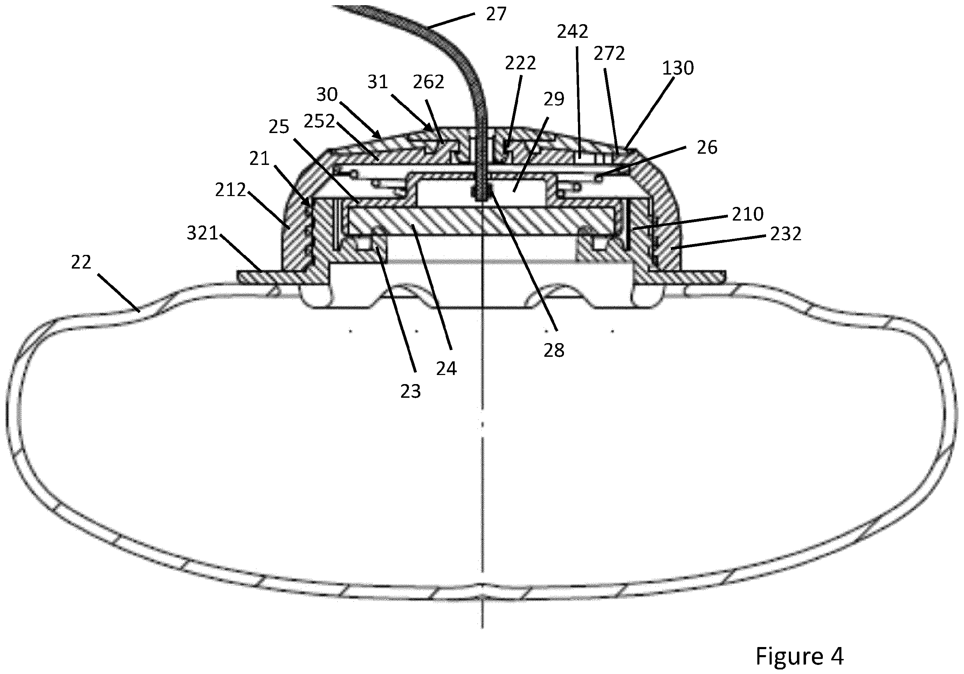

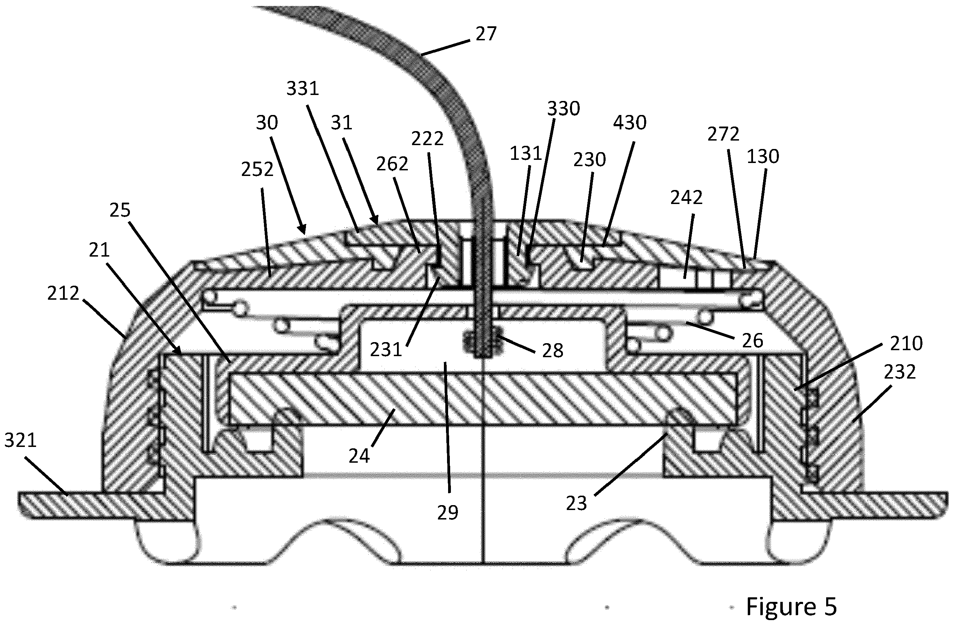

With particular reference to Figures 4 and 5, the illustrated cover 212 shows a plurality of through openings 242 provided on the upper wall of the same, i.e. on the wall opposite the shutter 24, 25. The openings 242 are distributed on an annular wall band, in particular coaxial, and are separated by radial material bridges 252 which connect a central part 262 to a perimeter band 272 which is provided in correspondence with a connection area of said upper wall to the terminal cylindrical portion 232.

The said upper surface and, in particular, the said perimeter band are shaped so as to form a sealing surface with which a membrane shutter 30 cooperates.

According to an embodiment, said diaphragm shutter 30 has at least one perimeter sealing lip 130 which co-operates in a tight manner against the perimeter strip 272 of the upper wall of the cover 212 being at least said perimeter lip 130 and said perimeter strip 272 correspondingly shaped.

According to a further feature present in this example, the membrane shutter is shaped with its face adhering against the upper side of the cover cap 212 in a manner corresponding to the whole of said upper side, extending the sealing adhesion areas for substantially all the areas of contact with said upper wall.

According to a further feature, an annular rib 230 protrudes along an annular circumference radially intermediate between the center and the perimeter edge of the diaphragm shutter 30 from the face of the same facing the cover cap, which is intended to engage with shape coupling in a coinciding groove obtained in the thickness of the upper wall of the cover cap 212.

The diaphragm shutter 30 is made of an elastomeric material such as rubber or the like and, as in the known diaphragm valves, it is configured in such a way that its intrinsic elasticity keeps it stably in the position of contact with the upper wall of the cover cap, i.e. with the perimeter band 272 and the other contact areas, while its flexibility is such as to allow an elastic deformation of removal or lifting of said diaphragm shutter 30 under the action of a force exerted by the pressure of a fluid passing through the valve seat when the valve is in the open condition, returning to the initial condition of contact with the areas provided on the wall of the cover cap when this action ceases due to the closure of the valve or the reduction in pressure of the outflowing fluid below a certain value.

In the closed condition of the valve, therefore, the openings of the cover remain effectively closed against infiltration of particles of any kind into the valve compartment delimited by the cover cap 212 and therefore the mechanism of the exhaust valve remains protected against soiling of the valve seat, of the shutter or of the zone of movement thereof by said particles and against malfunctions or impairments of functionality caused by said particles. In the discharging condition, the diaphragm shutter allows the outflow of the discharged fluid to escape easily and without generating an impediment, so the functionality of the discharge valve is not compromised in relation to its efficiency.

Depending on the construction of the discharge valve, different solutions can be provided for the configuration of the diaphragm shutter 30 and the means of fixing it to the cover cap 212.

In the illustrated embodiment, a solution is shown by way of example, in which the membrane shutter is made annular and has a free circular area 330 in its central area.

The means for fixing the shutter 30 to the covering cap 212 consist, in this case, of a central button 31. The central button 31 has a circular outer head 331 which overlaps an annular band 430 of the membrane shutter 30 along the edge that delimits the central opening of the same. Furthermore, the said central button has a tubular axial appendix 131 with a conical interlocking head 231 which tapers towards the free end of the said appendix 131, forming a leading surface for an interlocking by means of elastic forcing in a central hole 222 of the upper wall of the cover cap 212. This hole is of dimensions commensurate with the diameter of the intermediate tubular section of the said appendix 131, which diameter is smaller in a predetermined extent than the maximum diameter of the conical head 231. The said conical head has a maximum diameter which is greater of the diameter of the intermediate portion of the appendix 131 and which thus forms an annular step at the height of the connection area to the intermediate part of the appendix 131, while the axial length of the appendix 131 is such, that in coupled condition in the hole 222 of the cover cap 212, the membrane 30 remains firmly clamped between the external head 331 and the annular step formed by the conical head 231 at the end of the interlocking appendix 131.

Furthermore, to improve the locking in position of the annular membrane shutter 30, the lower rib 230 is provided to coincide with the band 430 of said membrane shutter 30 to which the external head 331 of the fastening button 31 overlaps.

The button 31 is entirely crossed from side to side by a coaxial passage hole for the actuation member, that is the cable 27, of the valve shutter 24, 25 which is connected similarly to what was previously described to the hard disk 25 of the said shutter.

Briefly and generally speaking, the annular shutter 30 according to this embodiment is fixed by tightening by means of a pin which has opposite annular surfaces of radial widening which overlap, one of them to an internal perimeter band of the membrane shutter 30 and the other to an abutment surface of the cover cap opposite to that of the diaphragm shutter, the pin being completely axially crossed by a through hole which constitutes the passage for the actuating member of the shutter 24, 25 of the discharge valve.

Other variants are possible, in which, for example, the diaphragm shutter is made up of a complete disc, i.e. not annular, and has a central hole that extends through a central appendix for engagement by snap-fit or by forcing into a hole 222 of the cover cap. In this case, the appendix can be made of one piece with the shutter material and the shutter hole can extend axially even inside the shutter up to the end of the appendix.

As it appears evident from the foregoing, the features of the present invention can also be provided in the form of a modification kit for existing valves.

In the illustrated embodiment, this kit must include a replacement cover 212 which has the internal features of the cover to be replaced and to which the membrane shutter 30 and the fixing button 31 are coupled or can be coupled.

Depending on the configuration of the existing cover cap, it is also possible to provide a modification kit which only has a diaphragm shutter 30 in combination with fixing means made in one piece as described above or consisting of separate construction parts 31, the shutter being a membrane and said fastening means to the pre-existing cover cap shaped correspondingly to the configuration of said cover cap.

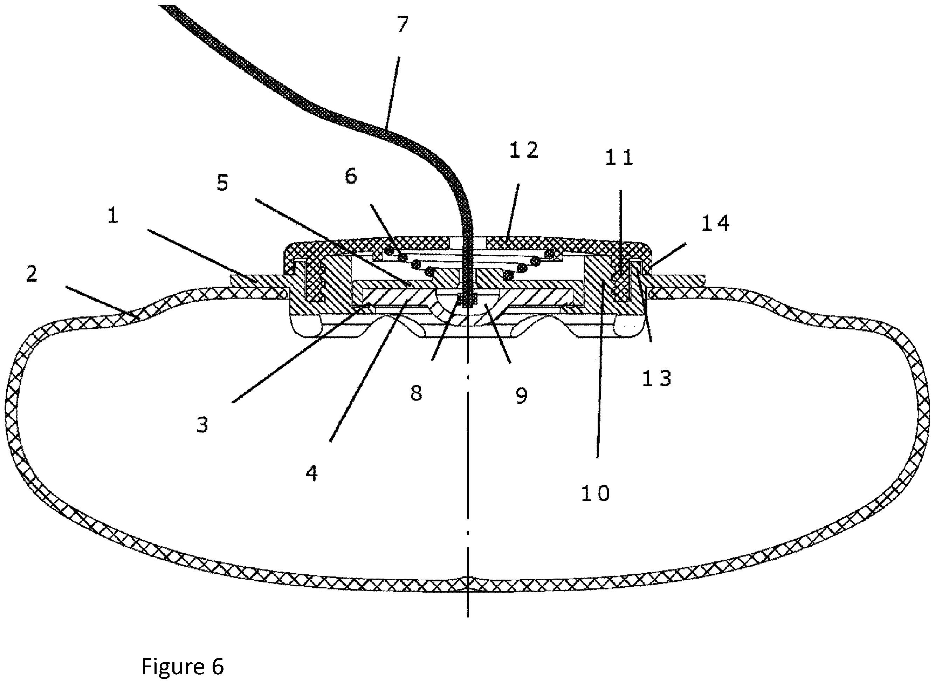

As shown in Figure 6, the invention can also be applied to other configurations of exhaust valves. Figure 6 shows a drain valve according to the patent IT102016000038632. In this example, the body of the discharge valve 1 is fixed to the inflatable bag 2, and provided, as usual, with a valve seat 3 against which a flat elastomer gasket 4 rests. The gasket 4 is kept in position closure by a hard disk 5 pushed by a calibrated conical helical spring 6. A control cable 7 is attached to the hard disk 5 whose coupling device 8 is contained in a closed seat 9 obtained in the flat gasket 4 instead of in the hard disk 5, to reduce the overall thickness of the valve object of the present invention. The valve body 1 is also provided with a threaded collar 10, with a relatively fine pitch thread, onto which a threaded connection and anchoring collar 11 formed in the cover cap 12 is screwed.

The manual and automatic opening operation of the drain valve is equivalent to what was previously described in the examples of figures 1 to 5.

In this advantageous embodiment, the valve body 1 is further provided with a cylindrical tubular collar 13 which contains and radially fixes the threaded connection and anchoring collar 11 of the cover cap 12 which in turn is provided with a cylindrical tubular collar 14 which further contains and radially fixes the collars 10, 11 and 13 of the body/seat assembly 2 - cover cap 10.

Also in this case, the cover cap 10 has one or more openings for the discharge of the fluid exhausted upon opening the discharge valve and which are not visible from the illustrated section. What appears evident from Figure 6 is however that the concepts and technical teachings of the present invention illustrated with reference to a valve of the type according to figure 1 are applicable without the need for substantial modifications of the technical teaching but only thanks to simple adaptations of shape to the configuration of the valve shown in figure 6.

Thanks to this, the advantages of protection against foreign bodies that can infiltrate the exhaust valve, compromising its functioning or in any case causing malfunctions, even partial, extend even to compact valves such as the one in figure 6. It is clear that precisely in the case of this type of valves, the reduced internal space of the valve, i.e. the compartment delimited by the cover cap and the valve seat, is more sensitive to functional interference with foreign particles that have penetrated into the valve itself and therefore the combination with the protective limb shutter with function as a non-return valve offers a synergistic advantage that goes beyond the mere aggregation of construction parts.

Also in the case of the valve of Figure 6, it is evident that the invention can be implemented in the form of a modification kit for existing valves configured according to one or more of the variants previously described.

According to still a possible variant embodiment, not illustrated in detail, alternatively or in combination with the discharge opening or openings 242 of the previous examples, the opening or openings in the cover 212 can be provided in the wall of the substantially cylindrical section, i.e. in the side walls of the cover 212 being provided for each of said openings in the side wall of the cover 212 alternatively or in combination at least one screen in the form of a net or grid and/or at least one valve seat with an associated shutter which has a stably closed position in relation to the direction of flow from the outside towards the inside of the cover 212 thanks to the pressure of the said flow on the shutter and can be opened in the direction of flow from the inside towards the outside thanks to the pressure of the outgoing flow analogously to the embodiment described above with reference to the shutter 30 in each of the variants provided for the same.

## Claims

1. Exhaust valve for inflatable diving equipment, such as diving buoyancy compensators or the like, comprising:
- a valve body (21) with an annular peripheral flange for sealing stable connection (321) with a band of material along the edge of a passage opening in the delimiting wall of a hollow body (22);
- a cylindrical collar (210) surrounded by said annular flange (321) and provided with coupling members to corresponding coupling members of a cover cap (212) of said valve body, and in which
- said cylindrical collar (210) internally carries an annular valve seat (23) which surrounds an opening of said valve seat (23) communicating with the hollow body (22), which valve seat (23) cooperates with a shutter comprising a gasket (24) and which shutter is provided on the side of the valve seat (23) opposite to the internal compartment of the hollow body (22) and is stably stressed, in the closed position of the valve against the valve seat (23), with a predetermined force, by an elastic element (26) which element is interposed between a wall of the cover cap (212) and the facing side of the shutter, while optional means (27) for moving the shutter, against the action of said elastic element (26), from the stable closed position of the valve to an open position of the valve in which the obturator is spaced from the valve seat (23) and in which,
the cover cap (212) covers outwards the valve seat (23) and the shutter being at a certain distance from them forming a compartment and the said cover cap (212) is provided with at least one passage opening for the discharge from said outlet gas compartment when said shutter is in a position spaced from said valve seat (23),
**characterized by** the fact that
associated with said at least one passage opening (242) of the cover cap (212) there is a screen (30) for interception and/or deflection of suspended particles or other material, which screen (30) leaves free the passage or closes in an openable manner the passage through said opening (242).

2. Exhaust valve according to claim 1, in which said screen consists of a net or a grid that extends over the entire open section of said at least one opening (242) and which has passage openings of a predetermined size.

3. Exhaust valve according to claim 1, wherein said at least one discharge passage is constituted by at least one opening stably open or openable, the axis of which is oriented mainly or exclusively tangentially to said at least one opening (242) of said cap cover (212) and the interception screen is constituted by a wall which overlaps, at a certain distance from it, the open section of said at least one opening (242) of the cover cap (212) and optionally also the wall of the cap cover (212) at least in the area surrounding said at least one opening (242).

4. Exhaust valve according to claim 1, wherein said at least one discharge passage is constituted by at least one opening stably open or openable, the axis of which is oriented mainly or exclusively tangentially to said at least one opening (242) of said cap cover (212) and the interception screen consists of a shutter (30) for closing said at least one opening (242) of the cover cap (212), which shutter is of the "non-return" valve type and closes the said at least one opening (242) of the cover cap (212) in the direction of passage from the outside towards the inside of the cover cap (212), while allowing the passage in the direction from the inside of the cover cap (212) to the outside of the same.

5. Valve according to claim 4, wherein the shutter for closing the opening or the openings (242) of the cover cap (212) consists of a diaphragm shutter which is configured to operate in accordance with a non-return valve membrane and in such a way as to maintain, thanks to the combination of shape and intrinsic elasticity, a closed condition in which it adheres against a sealing surface that surrounds the edge of the opening or of the openings (242) of the cover cap (212), while in condition of allowing passage of the fluid from the inside of the cover cap (212) towards the outside of the same, it is the pressure of the outgoing fluid itself that pushes the membrane, lifting it from the sealing surface, at least in correspondence with a perimeter lip (130) of the said membrane.

6. Valve according to one or more of the preceding claims, wherein the cover cap (212) has a plurality of openings (242) distributed along the upper surface thereof in an annular zone around a central axis of symmetry, while each of the said openings (242) can be provided with a dedicated interception screen which extends for the entire open section of the corresponding opening (242), or there is only one interception screen (30) provided which overlaps the cover cap (212) and all the openings (242) or there are provided more adjacent interception screens, each of which overlaps at least a predetermined number of said openings (242).

7. Valve according to one or more of the preceding claims, in which a single diaphragm shutter (30) in the form of a disk or annular element overlaps said upper side of the cover cap (212) and the openings (242) provided therein and at least one annular peripheral band in the connection area of said upper side of the cover cap (212) to the cylindrical or slightly conical side wall of the cover cap (212), which peripheral band forms a valve seat with which a coincident perimeter band (130) of the said membrane shutter (30) sealingly cooperates, the said membrane shutter (30) being provided in the central area with fastening members (31) to the said cover cap (212).

8. Valve according to one or more of the preceding claims in which the diaphragm shutter (30) is constituted by a disc and said members for fixing the diaphragm shutter consist of an appendix such as a central pin or peduncle which extends in the direction of the cover cap (212) and which is intended to engage by means of interlocking and/or shape coupling in a coincident central seat (222) provided in the upper wall of the cover cap (212), such as a hole or the like.

9. Valve according to one or more of the preceding claims, in which the shut-off screen and in particular the diaphragm shutter (30) is annular in shape and has a central opening, while the fastening members (31) consist of separate construction parts which have opposing clamping surfaces of the diaphragm shutter (30) and of the cover cap (212), which clamping surfaces are axially spaced from each other to such an extent as to overlap opposite surfaces of the membrane shutter and of the cover cap, tightening them against each other.

10. Valve according to claims one or more of the preceding claims, in which the fastening members of the shut-off screen and, in particular, of the diaphragm shutter are coupled by elastic interlocking in a hole or an interlocking seat (222) of the cap cover (212).

11. Valve according to one or more of the preceding claims, in which the means (27) for moving the shutter against the action of the elastic element (26), in the opening condition of the valve, consist in a tie rod, preferably of flexible material, such as a cord or the like, which tie rod is fixed to the shutter and passes outside the cover cap (212), through a through hole provided in the fastening members (31) of the interception screen and in particular of the diaphragm shutter (30) and/or in the membrane shutter (30) itself.

12. Valve according to claim 11, wherein the cover cap (212) has a coaxial central hole (222) for interlocking engagement of the fastening members (31) of the shut-off screen and in particular of the diaphragm shutter (30), said fastening members (31) being made tubular.

13. Kit for modification and integrating of pre-existing exhaust valves for inflatable diving equipment, which kit includes at least one interception screen such as a grid, a shield wall or a membrane shutter (30) of a shape corresponding to the upper wall of the cover cap (212) of the valve and members (31) for fixing the said intercepting screen to the said cover cap and in which the said fixing member (31) is optionally provided in at least one fixing point of the said membrane shutter (30) to the said cover cap (212) which at least one fixing point coincides with pre-existing coupling seats (222) of the cover cap (212), the said membrane shutter (30) and/or the said fixing elements (31) being provided with a passage opening coinciding with at least one passage opening (222) in the wall of the cover cap (212) intended for passage from the outside of the valve to the inside of the compartment delimited by the said cover cap of the actuation members (27), i.e. for displacement of the shutter opening and closing the valve and the said diaphragm shutter (30) and the said fastening members being made according to a or more of the preceding claims 1 to 12.

14. A kit according to claim 13, wherein said kit further comprises a replacement cover cap which has an identical shape and size as the cover cap present on the pre-existing valve, which replacement cover cap comprises a central through opening, one or more passage openings distributed around said central through opening and at least one radially outermost perimeter band of the upper wall of said cap which constitutes the valve seat and/or peripheral delimitation surfaces of the openings in the cover cap which constitute valve seats cooperating in a sealing manner with a membrane shutter (30);
the said replacing cover cap, the said shutter and the said fastening members (212, 30, 31) being made according to one or more of the previous claims 1 to 12 and being optionally already assembled to each other in operating condition.

15. Exhaust valve for inflatable diving equipment according to one or more of the preceding claims comprising an assembly consisting of a cover cap (12,12b) and a valve body/seat (1,1b) provided with threaded connection and reciprocal anchoring collars of cylindrical tubular shape (10-11, 10b-11b), said assembly containing a closing gasket (4), a closing hard disk (5) and a calibrated spring (6), and in which the cover cap (12, 12b) - valve body/seat (1,1b) assembly is further provided with one or more cylindrical tubular collars (13-14, 13b-14b) for radial containment of the threaded connection collars (10-11, 10b-11b).
